# EUROPÄISCHE PATENTSCHRIFT

(11) **EP 3 888 982 B1**
(45) Veröffentlichungstag und Bekanntmachung des Hinweises auf die Patenterteilung: **20.09.2023**
(21) Anmeldenummer: 21161392.2
(22) Anmeldetag: 09.03.2021
(51) Int. Cl.: B60T 13/58, B60T 8/17, B60T 13/66, B60T 13/68, B60T 15/18, B60T 7/04, B60T 7/20, B60T 8/171, B60T 8/172, B60T 8/1755, B60T 8/18, B60T 8/24, B60T 8/32, B60T 8/34, B60T 8/50, B60T 11/10, B60T 13/26, B60T 15/30, B60T 15/46

(54) **VERFAHREN ZUR BREMSSTEUERUNG EINES FAHRZEUGGESPANNS**
METHOD FOR CONTROLLING THE BRAKING OF A VEHICLE SET
PROCÉDÉ DE COMMANDE DES FREINS D'UN ATTELAGE POUR VÉHICULE

(30) Priorität: 10.03.2020 DE 102020106448
(43) Veröffentlichungstag der Anmeldung: 06.10.2021
(73) Patentinhaber: ZF CV Systems Europe BV, 1170 Brussels (BE)
(72) Erfinder: BRÜTT, Mirko, 31832 Springe (DE); VOLKER, Lars, 30926 Seelze (DE); LASKAWY, Ivo, 21149 Hamburg (DE)
(74) Vertreter: ZF Friedrichshafen AG

(56) Entgegenhaltungen:
- EP-A1- 3 450 270
- DE-A1- 3 936 726
- DE-A1- 19 633 834
- DE-A1- 19 955 798
- DE-A1-102013 019 240
- US-A- 5 281 006
- US-A- 5 409 301

## Beschreibung

Die Erfindung betrifft ein Verfahren zur Bremssteuerung eines Fahrzeuggespanns, welches aus einem Zugfahrzeug mit einer elektronisch gesteuerten hydraulischen oder pneumatischen Bremsanlage und mindestens einem Anhängerfahrzeug mit einer pneumatisch gesteuerten pneumatischen Bremsanlage besteht, und bei dem der Bremssteuerdruck des Anhängerfahrzeugs mittels eines elektronisch gesteuerten Anhängersteuerventils des Zugfahrzeugs in wenigstens eine zu einem zugfahrzeugseitigen Kupplungskopf "Bremse" führende zugfahrzeugseitige Bremssteuerleitung eingesteuert wird, wobei zu Beginn eines Bremsvorgangs ein den einzusteuernden Bremssteuerdruck übersteigender Druckimpuls in die zugfahrzeugseitige Bremssteuerleitung eingeleitet wird.

Bei den in Europa im Einsatz befindlichen schweren Nutzfahrzeugen, die für Fahrten auf Straßen vorgesehen sind, weisen etwa 95% der Fahrzeuggespanne, und zwar sowohl Zugfahrzeuge als auch Anhängerfahrzeuge, elektronisch gesteuerte pneumatische Bremsanlagen auf. Bei derartigen Fahrzeuggespannen werden Bremssignale von einem mit dem Bremspedal des Zugfahrzeugs in Wirkverbindung stehenden Bremswertgeber auf elektronischem Weg weitgehend verzögerungsfrei an ein Anhängerbremsventil des Anhängerfahrzeugs übertragen und dort diesbezügliche Bremsdrücke für die Radbremszylinder der Anhängerfahrzeuge eingestellt. Dadurch wird das Anhängerfahrzeug bei einem Bremsvorgang rechtzeitig abgebremst und ein Einknicken des Fahrzeuggespanns um dessen Sattelkupplung, Anhängerkupplung oder Deichselachse verhindert. Die aus Sicherheitsgründen trotzdem vorhandene pneumatische Bremssteuerleitung kommt nur bei einem Ausfall der elektronischen Bremssteuerung im Sinne einer Redundanz zum Einsatz. Bei für den Straßenverkehr vorgesehenen Fahrzeuggespannen mit zwei Anhängerfahrzeugen, die als sogenannte Euro-Combiliner oder Gigaliner bekannt sind, ist auch das erste Anhängerfahrzeug mit einem Anhängersteuerventil für das zweite Anhängerfahrzeug ausgestattet, so dass hier auch im einem Anhängersteuerventil für das zweite Anhängerfahrzeug ausgestattet, so dass hier auch im Redundanzfall ein schnelles Ansprechen der Fahrzeugbremsen aller Anhängerfahrzeuge gewährleistet ist.

Bei Fahrzeuggespannen, die für den Einsatz in der Land- und Forstwirtschaft, also vorwiegend für den Offroad-Einsatz vorgesehen sind, werden meistens relativ moderne Zugfahrzeuge mit einer elektronisch gesteuerten hydraulischen oder pneumatischen Bremsanlage in Kombination mit älteren Anhängerfahrzeugen verwendet, wobei letztere mit einer pneumatisch gesteuerten pneumatischen Bremsanlage ausgerüstet sind. Für die Steuerung der Bremsanlage des genannten Anhängerfahrzeugs ist die Bremsanlage des Zugfahrzeugs mit einem elektronisch gesteuerten Anhängersteuerventil ausgestattet, mittels dem der jeweilige Bremssteuerdruck für das Anhängerfahrzeug in eine zu dem Kupplungskopf "Bremse" (gelb) führende Bremssteuerleitung eingesteuert wird.

DE 196 33 834 A1 zeigt ein Verfahren zur Steuerung einer Bremsanlage eines Fahrzeuggespanns, wobei bei erstmaligem Betätigen des Bremspedals ein Betätigungsimpuls für das zweite Teilfahrzeug erzeugt wird, welcher aus dem Anlegedruck des zweiten Teilfahrzeugs abgeleitet ist.

Die DE 10 2013 019 240 A1 lehrt ein Verfahren zum Erkennen von einem Betriebszustand eines Fahrzeugs, insbesondere das Vorhandensein eines Anhängers, durch die Auswertung des Druckverlaufs der Steuerverbindung und Vergleich mit einem Referenzdruckverlauf.

Mehrere Ausführungen einer elektronisch gesteuerten hydraulischen Bremsanlage eines Zugfahrzeugs mit einem elektronisch gesteuerten Anhängersteuerventil für ein Anhängerfahrzeug mit einer pneumatisch gesteuerten pneumatischen Bremsanlage sind in der DE 10 2014 002 614 A1 beschrieben. Das dort vorgesehene Anhängersteuerventil umfasst neben einem Einlassventil, einem Auslassventil, einem Relaisventil und einem Abrissventil auch einen Drucksensor zur Erfassung des eingesteuerten, an dem Kupplungskopf "Bremse" (gelb) des Zugfahrzeugs anliegenden Bremssteuerdruckes.

Der Aufbau einer pneumatisch gesteuerten pneumatischen Bremsanlage eines Anhängerfahrzeugs, das für das Ankoppeln eines weiteren Anhängerfahrzeugs vorgesehen ist, kann beispielhaft der WABCO-Druckschrift Nr. 815 020 082 3 "Druckluftbremsanlage Land- und Forstwirtschaft / Produktkatalog" unter Kapitel 4 Drucklufterzeugungsanlagen / 4.2 Zweileitungs-Druckluftbremsanlagen auf Seite 24 entnommen werden. steht, kann das Volumen der an den Kupplungskopf "Bremse" (gelb) angeschlossenen Bremssteuerleitung des mindestens einen Anhängerfahrzeugs problematisch groß sein, da der bei einem Bremsvorgang über das Anhängersteuerventil des Zugfahrzeugs eingesteuerte Druckanstieg verzögert an dem Anhängerbremsventil des Anhängerfahrzeugs beziehungsweise bei zwei Anhängerfahrzeugen an den Anhängerbremsventilen der mehreren Anhängerfahrzeuge ankommt. Hierdurch erfolgt das Geradeziehen des Fahrzeuggespanns durch die Betätigung der Radbremsen des Anhängerfahrzeugs beziehungsweise der Anhängerfahrzeuge verspätet und es kann zum unerwünschten Einknicken des Fahrzeuggespanns um eine Anhängerkupplung oder Deichselachse kommen. Der bremsbedingte Druckanstieg am Steuereingang des Anhängerbremsventils beziehungsweise an den Steuereingängen der mehreren Anhängerbremsventile und damit der Betätigung der Radbremsen des Anhängerfahrzeugs beziehungsweise der Anhängerfahrzeuge wird umso stärker verzögert, je größer das Volumen der anhängerseitigen Bremssteuerleitungen ist. Das Problem ist daher bei größeren Anhängerfahrzeugen mit einer entsprechend langen Bremssteuerleitung und bei zwei gekoppelten Anhängerfahrzeugen, bei denen das Volumen der Bremssteuerleitungen bis zu zwei Liter betragen kann, besonders gravierend.

In der WABCO-Druckschrift Nr. 815 020 208 3 "EBS 3 - Elektronisches Bremssystem / Systembeschreibung" geht aus Kapitel 5 Funktionsbeschreibung / 5.2 Bremsenmanagement / 5.2.8 Anhängersteuerung auf Seite 14 hervor, dass zu Beginn eines Bremsvorgangs ein dort als kurzer Druckeinschuss bezeichneter Druckimpuls in die Bremssteuerleitung erfolgen kann, um die Reaktion der Anhängerbremsen zu verbessern. Dieser WABCO-Druckschrift sind jedoch keine näheren Angaben zur Ausgestaltung des in die Bremssteuerleitung einzusteuernden Druckimpulses zu entnehmen.

Der Erfindung liegt daher die Aufgabe zugrunde, ein Verfahren zur Bremssteuerung eines Fahrzeuggespanns der eingangs genannten Bauart vorzustellen, welches Angaben zur Ausgestaltung des zu Beginn eines Bremsvorgangs in die Bremssteuerleitung einzusteuernden Druckimpulses macht.

Diese Aufgabe wird durch ein Verfahren gelöst, welches die Merkmale des Anspruchs 1 aufweist. Vorteilhafte Weiterbildungen dieses Verfahrens sind in den abhängigen Ansprüchen genannt.

Demnach betrifft die Erfindung ein Verfahren zur Bremssteuerung eines Fahrzeuggespanns, welches aus einem Zugfahrzeug mit einer elektronisch gesteuerten hydraulischen oder pneumatischen Bremsanlage und mindestens einem Anhängerfahrzeug mit einer pneumatisch gesteuerten pneumatischen Bremsanlage besteht, und bei dem der Bremssteuerdruck des Anhängerfahrzeugs mittels eines elektronisch gesteuerten Anhängersteuerventils des Zugfahrzeugs in wenigstens eine zu einem zugfahrzeugseitigen Kupplungskopf "Bremse" führende zugfahrzeugseitige Bremssteuerleitung eingesteuert wird, wobei zu Beginn eines Bremsvorgangs ein den einzusteuernden Bremssteuerdruck übersteigender Druckimpuls in die zugfahrzeugseitige Bremssteuerleitung eingeleitet wird.

Zur Lösung der gestellten Aufgabe ist bei diesem Verfahren vorgesehen, dass das Volumen von wenigstens einer an den Kupplungskopf "Bremse" angekoppelten Bremssteuerleitung des wenigstens einen Anhängerfahrzeugs ermittelt wird, und dass der Betrag Δp_{PI} und/oder die Dauer Δt_{PI}, des in die wenigstens eine Bremssteuerleitung des mindestens einen Anhängerfahrzeugs eingeleiteten Druckimpulses in Abhängigkeit von dem Volumen der wenigstens einen Bremssteuerleitung festgelegt wird.

Durch die Ermittlung des Volumens der wenigstens einen Bremssteuerleitung des mindestens einen Anhängerfahrzeugs und die Festlegung des Betrags Δp_{PI} und/oder der Dauer Δt_{PI} des eingesteuerten Druckimpulses in Abhängigkeit von dem Volumen der wenigstens einen Bremssteuerleitung wird der Druckimpuls optimal an die wenigstens eine Bremssteuerleitung des mindestens einen Anhängerfahrzeugs angepasst sowie ein schnelles Ansprechverhalten der Radbremsen des Anhängerfahrzeugs erreicht.

Da vor einem Fahrbetrieb verschiedene Anhängerfahrzeuge mit unterschiedlichen Volumen ihrer Bremssteuerleitungen an ein Zugfahrzeug angekoppelt werden können, ist vorzugsweise vorgesehen, dass das Volumen der Bremssteuerleitung des Anhängerfahrzeugs (beziehungsweise bei zwei Anhängerfahrzeugen der Bremssteuerleitungen der beiden Anhängerfahrzeuge) nach jeder Inbetriebnahme des Zugfahrzeugs ermittelt und danach in einem Datenspeicher eines elektronischen Steuergerätes abgespeichert wird. Der Datenspeicher ist vorzugsweise dem elektronischen Steuergerät des Anhängersteuerventils des Zugfahrzeugs zugeordnet.

Zur Ermittlung des Volumens der wenigstens einen anhängerseitigen Bremssteuerleitung ist vorgesehen, dass bei einem Lösen der Radbremsen des Fahrzeuggespanns der in den mit dem zugfahrzeugseitigen Kupplungskopf "Bremse" verbundenen Bremssteuerleitungen herrschende Luftdruck während des Druckabfalls Δp_{PD} sensorisch erfasst wird, dass aus dem zeitlichen Verlauf des Luftdruckes die Dauer Δt_{PD} des Druckabfalls Δp_{PD} und/oder der mittlere Druckgradient (dp_{PD}/dt_{PD})ₘ des Druckabfalls Δp_{PD} bestimmt wird, und dass aus der Dauer des Druckabfalls Δt_{PD} und/oder dem mittleren Druckgradienten (dp_{PD}/dt_{PD}), des Druckabfalls Δp_{PD} das Volumen der wenigstens einen Bremssteuerleitung des wenigstens einen Anhängerfahrzeugs bestimmt wird.

Hierbei ist bevorzugt vorgesehen, dass bei einer einen vorbestimmten Zeitraum überschreitenden langen Dauer Δt_{PD} des Druckabfalls Δp_{PD} auf ein Gesamtvolumen der wenigstens einen Bremssteuerleitung von mehr als einem Anhängerfahrzeug geschlossen wird.

Ebenso kann alternativ dazu oder ergänzend vorgesehen sein, dass bei einem Unterschreiten des mittleren Druckgradienten |(dp_{PD}/dt_{PD})ₘ| des Druckabfalls Δp_{PD} unter einen vorbestimmten Grenzdruckgradienten auf ein Gesamtvolumen der wenigstens einen Bremssteuerleitung von mehr als einem Anhängerfahrzeug geschlossen wird.

Solange kein aktueller Wert des Volumens der wenigstens einen Bremssteuerleitung ermittelt wurde, kann ein in einem vorhergehenden Fahrbetrieb des Fahrzeuggespanns ermittelter und abgespeicherter Wert des Volumens der wenigstens einen Bremssteuerleitung verwendet werden. Alternativ dazu kann auch vorgesehen sein, dass ein vorgegebener Standardwert des Volumens einer Bremssteuerleitung verwendet wird, solange kein aktueller Wert des Volumens der wenigstens einen Bremssteuerleitung ermittelt wurde.

Zur Ausgestaltung des eingesteuerten Druckimpulses kann vorgesehen sein, dass der Betrag Δp_{PI} des Druckimpulses im Vergleich zu dem einzusteuernden Bremssteuerdruck p_{BC_soll} mit zunehmendem Volumen der wenigstens einen Bremssteuerleitung erhöht wird.

Um eine Beschädigung der wenigstens einen Bremssteuerleitung und der an diese angeschlossenen Ventile zu vermeiden, ist gemäß einer anderen Weiterbildung des Verfahrens vorgesehen, dass der Betrag Δp_{PI} des Druckimpulses im Vergleich zu dem einzusteuernden Bremssteuerdruck p_{BC_soll} durch einen zulässigen Maximaldruck p_{BC_max} in der wenigstens einen Bremssteuerleitung begrenzt wird, und zwar derart, dass ein zuvor festgelegter Maximaldruck p_{BC_max} in der wenigstens einen Bremssteuerleitung während des Druckimpulses nicht überschritten wird (p_{BC_soll} + Δp_{PI} ≤ p_{BC_max}).

Alternativ oder zusätzlich zu der Druckdifferenz Δp_{PI} des Druckimpulses kann auch die Dauer Δt_{PI} des Druckimpulses mit zunehmendem Volumen der wenigstens einen Bremssteuerleitung erhöht werden.

Die Erfindung wird nachstehend anhand eines in der beigefügten Zeichnung dargestellten beispielhaften Ausführungsbeispiels näher erläutert. In der Zeichnung zeigt
Fig. 1 ein Fahrzeuggespann bestehend aus einem Zugfahrzeug und zwei Anhängerfahrzeugen in einer Draufsicht,
Fig. 2 in einem Diagramm dargestellte Verläufe von Bremssteuerdrücken und Radbremsdrücken des Fahrzeuggespanns gemäß Fig. 1 über die Zeit ohne eine Einsteuerung eines Druckimpulses,
Fig. 3 in einem Diagramm dargestellte Verläufe von Bremssteuerdrücken an einem Kupplungskopf einer Bremssteuerleitung über die Zeit zur Ermittlung des Volumens der Bremssteuerleitung, und
Fig. 4 in einem Diagramm dargestellte Verläufe von Bremssteuerdrücken und Radbremsdrücken des Fahrzeuggespanns gemäß Fig. 1 über die Zeit mit einer Einsteuerung eines Druckimpulses.

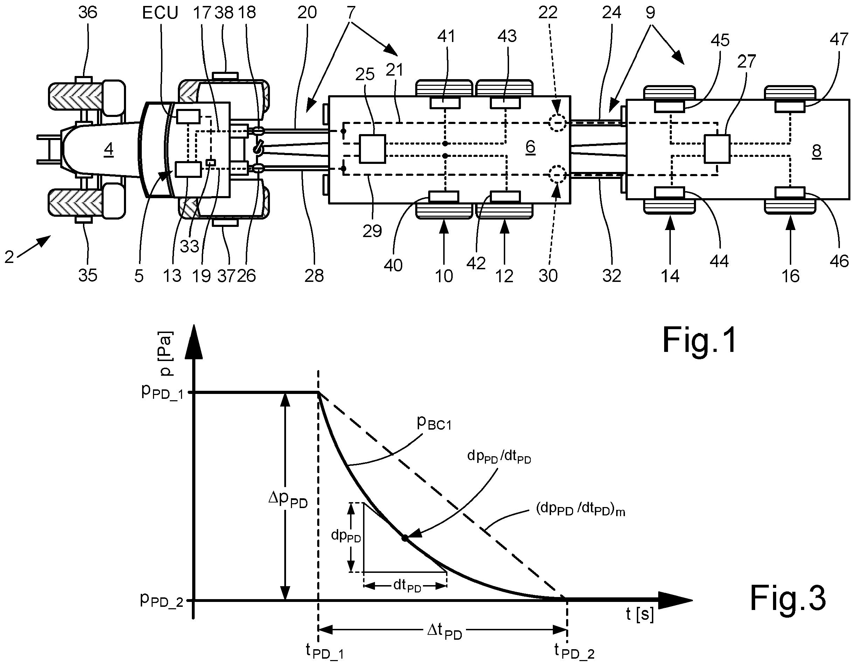

Das in Fig. 1 in einer Draufsicht abgebildete Fahrzeuggespann 2 umfasst ein als Ackerschlepper ausgebildetes Zugfahrzeug 4, ein an das Zugfahrzeug 4 angekoppeltes erstes Anhängerfahrzeug 6 sowie ein an das erste Anhängerfahrzeug 6 angekoppeltes zweites Anhängerfahrzeug 8. Das erste Anhängerfahrzeug 6 ist als ein Doppelachsanhänger mit zwei Tandemachsen 10, 12 ausgeführt. Bei dem zweiten Anhängerfahrzeug 8 handelt es sich um einen Deichselanhänger mit einer lenkbaren Vorderachse 14 und einer starr an einem Rahmen befestigten Hinterachse 16. Das Fahrzeuggespann könnte aber auch eine dazu umgekehrte Anhängerreihenfolge oder zwei gleiche Anhängertypen aufweisen. An den Rädern des Zugfahrzeugs 4 und an den Rädern der beiden Anhängerfahrzeuge 6, 8 sind Radbremsen 35, 36, 37, 38; 40, 41, 42, 43; 44, 45, 46, 47 zum Abbremsen derselben angeordnet.

Der Ackerschlepper 4 weist eine nicht vollständig dargestellte elektronisch gesteuerte hydraulische Bremsanlage 5 auf. Das erste Anhängerfahrzeug 6 verfügt über eine pneumatisch gesteuerte und pneumatisch betätigbare erste Bremsanlage 7 mit einer ersten Vorratsleitung 20 sowie einer ersten Bremssteuerleitung 28. Das zweite Anhängerfahrzeug 8 weist ebenso eine pneumatisch gesteuerte und pneumatisch betätigbare zweite Bremsanlage 9 mit einer zweiten Vorratsleitung 24 sowie einer zweiten Bremssteuerleitung 32 auf.

Zur Bremssteuerung der Radbremsen 40, 41, 42, 43; 44, 45, 46, 47 der beiden Anhängerfahrzeuge 6, 8 weist die Bremsanlage 5 des Ackerschleppers 4 ein von einem elektronischen Steuergerät ECU gesteuertes Anhängersteuerventil 13 auf, von dem eine Vorratsleitung 17 des Zugfahrzeugs 4 an einen zugfahrzeugseitigen Kupplungskopf "Vorrat" (rot) 18 und eine Bremssteuerleitung 19 des Zugfahrzeugs 4 an einen zugfahrzeugseitigen Kupplungskopf "Bremse" (gelb) 26 führen. An den zugfahrzeugseitigen Kupplungskopf "Vorrat" 18 ist die Vorratsleitung 20 des ersten Anhängerfahrzeugs 6 angeschlossen, und an dem zugfahrzeugseitigen Kupplungskopf "Bremse" 26 ist die Bremssteuerleitung 28 des ersten Anhängerfahrzeugs 6 angeschlossen.

Von der Vorratsleitung 20 des ersten Anhängerfahrzeugs 6 führt eine abgezweigte Vorratsleitung 21 an einen in Fig. 1 nicht unmittelbar erkennbaren, am Fahrzeugheck des ersten Anhängerfahrzeugs 6 angeordneten anhängerseitigen Kupplungskopf "Vorrat" (rot) 22, an den eine zweite Vorratsleitung 24 des zweiten Anhängerfahrzeugs 8 angeschlossen ist. In ähnlicher Weise führt auch eine von der Bremssteuerleitung 28 des ersten Anhängerfahrzeugs 6 abgezweigte Bremssteuerleitung 29 zu einen in Fig. 1 nicht unmittelbar erkennbaren, am Fahrzeugheck des ersten Anhängerfahrzeugs 6 angeordneten anhängerseitigen Kupplungskopf "Bremse" (gelb) 30, an den eine zweite Bremssteuerleitung 32 des zweiten Anhängerfahrzeugs 8 angeschlossen ist.

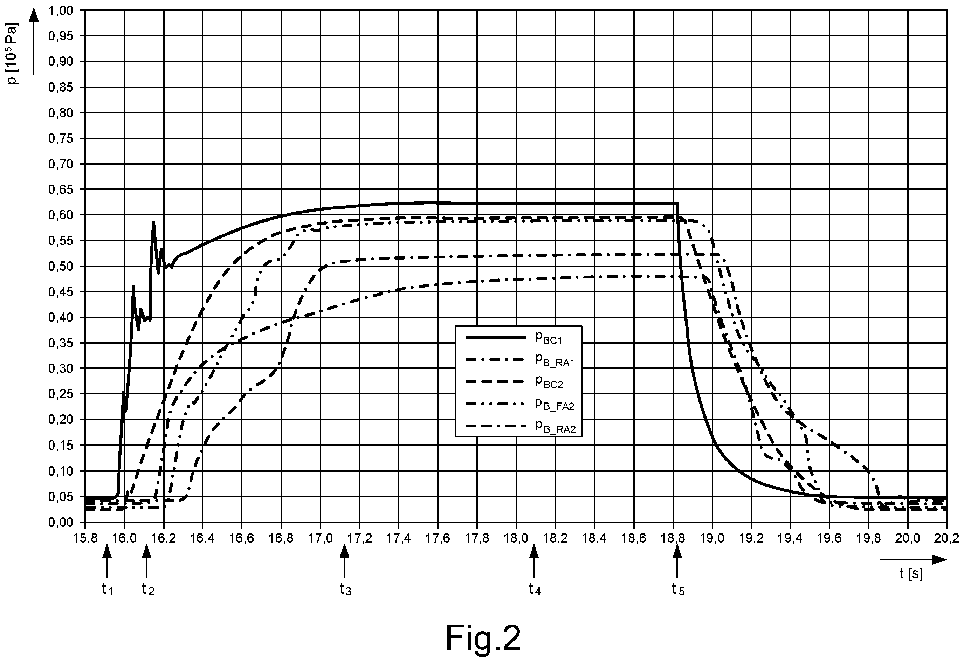

Die beiden anhängerseitigen Vorratsleitungen 20, 24 und die beiden anhängerseitigen Bremssteuerleitungen 28, 32 führen zu einem ersten Anhängerbremsventil 25 am ersten Anhängerfahrzeug 6 beziehungsweise zu einen zweiten Anhängerbremsventil 27 am zweiten Anhängerfahrzeug 8, in denen die Radbremsdrücke p_{B} an den Radbremsen 40, 41, 42, 43; 44, 45, 46, 47 der Fahrzeugachsen 10, 12; 14, 16 der beiden Anhängerfahrzeuge 6, 8 eingestellt werden. Aufgrund des großen gemeinsamen Volumens der Bremssteuerleitungen 28, 29, 32 kommt es bei einem Bremsvorgang ohne weitere Maßnahmen zu einem zeitlich verzögerten Ansprechen der Radbremsen 40, 41, 42, 43; 44, 45, 46, 47 an den Fahrzeugachsen 10, 12; 14, 16 der beiden Anhängerfahrzeuge 6, 8. Dies ist in dem in Fig. 2 abgebildeten Diagramm veranschaulicht. In diesem Diagramm sind über die Zeit t die Verläufe des Bremssteuerdruckes p_{BC1} an dem Kupplungskopf "Bremse" 26 des Zugfahrzeugs 4, des Radbremsdruckes p_{B_RA1}, an den Radbremsen 40, 41, 42, 43 der beiden Fahrzeugachsen 10, 12 des ersten Anhängerfahrzeugs 6, des Bremssteuerdruckes p_{BC2} an dem Kupplungskopf "Bremse" 30 des ersten Anhängerfahrzeugs 6, des Radbremsdruckes p_{B_FA2} an den Radbremsen 44, 45 der Vorderachse 14 des zweiten Anhängerfahrzeugs 8 sowie des Radbremsdruckes p_{B_RA2} an den Radbremsen 46, 47 der Hinterachse 16 des zweiten Anhängerfahrzeugs 8 während eines Bremsvorgangs abgebildet sind.

Der dort dargestellte konventionell gesteuerte Bremsvorgang beginnt zum Zeitpunkt t₁, wonach zunächst die Bremssteuerdrücke p_{BC1}, p_{BC2} an den beiden Kupplungsköpfen "Bremse" 26, 30 ansteigen. Ab dem Zeitpunkt t₂ steigen auch die Radbremsdrücke p_{B_RA1}, p_{B_FA2}, p_{B_RA2} an den Radbremsen 40, 41, 42, 43; 44, 45, 46, 47 der Fahrzeugachsen 10, 12; 14, 16 der beiden Anhängerfahrzeuge 6, 8 an. In etwa zum Zeitpunkt t₃ erreichen die Bremssteuerdrücke p_{BC1}, p_{BC2} an den beiden Kupplungsköpfen "Bremse" 26, 30 und die Radbremsdrücke p_{B_FA2}, p_{B_RA2} an den Radbremsen 44, 45, 46, 47 der Fahrzeugachsen 14, 16 des zweiten Anhängerfahrzeugs 8 ihre Sollwerte, während der Maximalwert des Radbremsdrucks p_{B_RA1}, an den Radbremsen 40, 41, 42, 43 der Fahrzeugachsen 10, 12 des ersten Anhängerfahrzeugs 6 erst zum Zeitpunkt t₄ erreicht wird. Zum Zeitpunkt t₅ wird der Bremsvorgang beendet, und die Bremssteuerdrücke p_{BC1}, p_{BC2} sowie die Radbremsdrücke p_{B_RA1}, ρ_{B_FA2}, p_{B_RA2} sinken nachfolgend wieder auf Werte nahe Null ab.

Zur Verbesserung des Ansprechverhaltens der Radbremsen 40, 41, 42, 43; 44, 45, 46, 47 an den Fahrzeugachsen 10, 12; 14, 16 der beiden Anhängerfahrzeuge 6, 8 ist vorgesehen, dass zu Beginn eines Bremsvorgangs von dem Anhängersteuerventil 13 ein den einzusteuernden Bremssteuerdruck p_{BC1_soll} übersteigender Druckimpuls in die zu dem Kupplungskopf "Bremse" 26 des Zugfahrzeugs 4 führende zugfahrzeugseitige Bremssteuerleitung 19 und damit auch in die angeschlossene Bremsdruckleitung 28 des ersten Anhängerfahrzeugs 6, in die von dieser abgezweigten Bremsdruckleitung 29 und in die Bremssteuerleitung 32 des zweiten Anhängerfahrzeugs 8 eingesteuert wird. Der Betrag Δp_{PI} des eingesteuerten Druckimpulses, um den dieser den eigentlich einzusteuernden Bremssteuerdruck p_{BC1_soll} übersteigt, und/oder die Dauer Δt_{PI} des eingesteuerten Druckimpulses werden in Abhängigkeit von dem Volumen der angeschlossenen Bremssteuerleitungen 28, 29, 32 der angekoppelten Anhängerfahrzeuge 6, 8 festgelegt. Dabei wird die Druckdifferenz Δp_{PI} und/oder die Dauer Δt_{PI}, des Druckimpulses mit zunehmendem Volumen der angeschlossenen Bremssteuerleitungen 28, 29, 32 vergrößert.

Das Volumen der angeschlossenen anhängerseitigen Bremssteuerleitungen 28, 29, 32 wird zuvor bei einem Lösen der Radbremsen 35, 36, 37, 38; 40, 41, 42, 43; 44, 45, 46, 47 oder der Feststellbremsen des Fahrzeuggespanns 2 derart ermittelt, dass bei einem Lösen der Radbremsen 35, 36, 37, 38; 40, 41, 42, 43, 44, 45, 46, 47 des Fahrzeuggespanns 2 die in den mit dem zugfahrzeugseitigen Kupplungskopf "Bremse" 26 verbundenen Bremssteuerleitungen 19, 28, 29, 32 sich einstellende Luftdruckdifferenz Δp_{PD} während des Druckabfalls von dem elektronischen Steuergerät ECU mittels eines Drucksensors 33 gemessen wird, dass aus dem zeitlichen Verlauf des Luftdruckes die Dauer Δt_{PD} des Druckabfalls und/oder der mittlere Druckgradient (dp_{PD}/dt_{PD})ₘ des Druckabfalls bestimmt wird, und dass aus der Dauer des Druckabfalls Δt_{PD} und/oder dem mittleren Druckgradienten (dp_{PD}/dt_{PD})ₘ des Druckabfalls das Volumen der angeschlossenen Bremssteuerleitungen 19, 28, 29, 32 der angekoppelten Anhängerfahrzeuge 6, 8 bestimmt wird.

Ein entsprechender zeitlicher Verlauf des an dem Kupplungskopf "Bremse" 26 des Zugfahrzeugs 4 anliegenden Bremssteuerdruckes p_{BC1} während eines Lösens der Radbremsen ist in dem Diagramm der Fig. 3 abgebildet. Deutlich erkennbar fällt der Bremssteuerdruck p_{BC1} von einem anfänglichen Wert p_{PD_1} zu einem ersten Zeitpunkt t_{PD_1} vor dem Druckabfall über einen Zeitraum Δt_{PD} bis zu einem zweiten Zeitpunkt t_{PD_2} nach dem Druckabfall auf einen zweiten Wert p_{PD_2} entlang des dargestellten Kurvenverlaufs degressiv ab. Der Druckgradient dp_{PD}/dt_{PD} des Druckabfalls Δp_{PD} ist in einem in dem Zeitraum Δt_{PD} beliebigen Zeitpunkt durch das Druckdifferential dp_{PD} in Bezug zum Zeitdifferential dt_{PD} gegeben. Der mittlere Druckgradient (dp_{PD}/dt_{PD})ₘdes Druckabfalls Δp_{PD} ist durch eine weit gestrichelt gezeichnete Linie dargestellt.

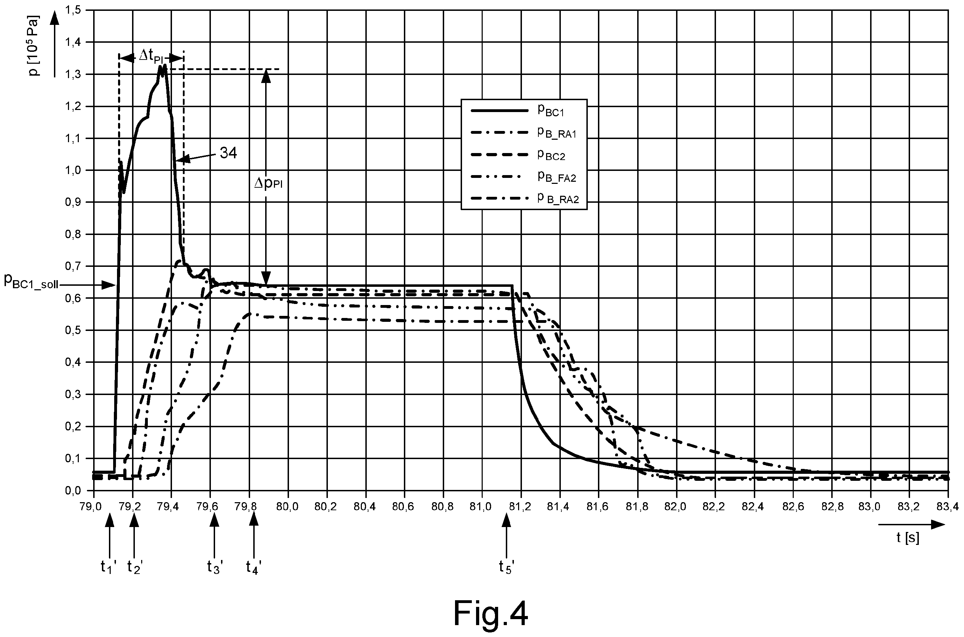

Die Auswirkung der Einsteuerung eines Druckimpulses 34 zu Beginn eines Bremsvorgangs ist dem in Fig. 4 abgebildeten Diagramm dargestellt, in dem die zeitlichen Verläufe des Bremssteuerdruckes p_{BC1} an dem Kupplungskopf "Bremse" 26 des Zugfahrzeugs 4, des Radbremsdruckes p_{B_RA1} an den Radbremsen 40, 41, 42, 43 der Fahrzeugachsen 10, 12 des ersten Anhängerfahrzeugs 6, des Bremssteuerdruckes p_{BC_2} an dem Kupplungskopf "Bremse" 30 des ersten Anhängerfahrzeugs 6, des Radbremsdruckes p_{B_FA2} an den Radbremsen 44, 45 der Vorderachse 14 des zweiten Anhängerfahrzeugs 8 sowie des Radbremsdruckes p_{B_RA2} an den Radbremsen 46, 47 der Hinterachse 16 des zweiten Anhängerfahrzeugs 8 während eines erfindungsgemäßen Bremsvorgangs abgebildet sind.

Der Bremsvorgang beginnt zum Zeitpunkt t₁', wonach zunächst die Bremssteuerdrücke p_{BC1}, p_{BC2} an den Kupplungsköpfen "Bremse" 26, 30 ansteigen. Aufgrund des mit dem Betrag Δp_{PI} und der Dauer Δt_{PI} eingesteuerten Druckimpulses 34 steigen die Radbremsdrücke p_{B_RA1}, p_{B_FA2}, p_{B_RA2} an den Radbremsen 40, 41, 42, 43; 44, 45, 46, 47 der Fahrzeugachsen 10, 12; 14, 16 der Anhängerfahrzeuge 6, 8 nun schon ab dem Zeitpunkt t₂' an. Zum Zeitpunkt t₃' erreichen die Bremssteuerdrücke p_{BC1}, p_{BC2} an den beiden Kupplungsköpfen "Bremse" 26, 30 vergleichsweise schnell ihre Sollwerte p_{BC1_soll}. Kurz darauf erreichen in etwa zum Zeitpunkt t₄' auch die Radbremsdrücke p_{B_RA1}, p_{B_FA2}, p_{B_RA2} an den Radbremsen 40, 41, 42, 43; 44, 45, 46, 47 der Fahrzeugachsen 10, 12; 14, 16 der Anhängerfahrzeuge 6, 8 ihre Sollwerte. Zum Zeitpunkt t₅' wird der Bremsvorgang beendet, woraufhin die Bremssteuerdrücke p_{BC1}, p_{BC2} und die Radbremsdrücke p_{B_RA1}, p_{B_FA2}, p_{B_RA2} wieder auf Werte nahe Null absinken.

Aus dem Vergleich der Diagramme in Fig. 2 und Fig. 4 geht hervor, dass der Bremssteuerdruck p_{BC2} an dem Kupplungskopf "Bremse" 30 des ersten Anhängerfahrzeugs 6 und die Radbremsdrücke p_{B_RA1}, p_{B_FA2}, p_{B_RA2} an den Radbremsen 40, 41, 42, 43; 44, 45, 46, 47 der Fahrzeugachsen 10, 12; 14, 16 beider Anhängerfahrzeuge 6, 8 mit der Einsteuerung des Druckimpulses 34 zu Beginn des Bremsvorgangs gemäß Fig. 4 deutlich früher ansteigen und wesentlich schneller ihre Sollwerte erreichen. Hierdurch wird ein erkennbar verbessertes Bremsverhalten des Fahrzeuggespanns 2 erreicht, da das Fahrzeuggespann 2 bei einem Bremsvorgang gestreckt wird und ein Einknicken um eine Anhängerkupplung eines der Anhängerfahrzeuge 6, 8 oder um die Deichselachse des ersten Anhängerfahrzeugs 6 verhindert wird. Aufgrund der vorangegangenen Ermittlung des Volumens der Bremssteuerleitungen 19, 28, 29, 32 und der Anpassung des Betrages Δp_{PI} und/oder der Dauer Δt_{PI} des eingesteuerten Druckimpulses 34 in Abhängigkeit vom Volumen der Bremssteuerleitungen 19, 28, 29, 32 ist der Druckimpuls 34 optimal auf die jeweils an das Zugfahrzeug 4 angekoppelten Anhängerfahrzeuge 6, 8 abgestimmt.

### Bezugszeichenliste

- 2: Fahrzeuggespann
- 4: Zugfahrzeug, Ackerschlepper
- 5: Bremsanlage des Zugfahrzeugs
- 6: Erstes Anhängerfahrzeug, Doppelachsanhänger
- 7: Bremsanlage des ersten Anhängerfahrzeugs; erste pneumatische Bremsanlage
- 8: Zweites Anhängerfahrzeug, Deichselanhänger
- 9: Bremsanlage des zweiten Anhängerfahrzeugs; zweite pneumatische Bremsanlage
- 10: Erste Tandemachse am ersten Anhängerfahrzeug
- 12: Zweite Tandemachse am ersten Anhängerfahrzeug
- 13: Anhängersteuerventil
- 14: Vorderachse des zweiten Anhängerfahrzeugs
- 16: Hinterachse des zweiten Anhängerfahrzeugs
- 17: Vorratsleitung des Zugfahrzeugs
- 18: Zugfahrzeugseitiger Kupplungskopf "Vorrat" (rot)
- 19: Zugfahrzeugseitige Bremssteuerleitung
- 20: Vorratsleitung des ersten Anhängerfahrzeugs
- 21: Von Vorratsleitung 20 abgezweigte Vorratsleitung
- 22: Kupplungskopf "Vorrat" (rot) am ersten Anhängerfahrzeug
- 24: Vorratsleitung des zweiten Anhängerfahrzeugs
- 25: Anhängerbremsventil am ersten Anhängerfahrzeug
- 26: Zugfahrzeugseitiger Kupplungskopf "Bremse" (gelb)
- 27: Anhängerbremsventil am zweiten Anhängerfahrzeug
- 28: Bremssteuerleitung des ersten Anhängerfahrzeugs
- 29: Von der Bremssteuerleitung 28 abgezweigte Bremssteuerleitung
- 30: Kupplungskopf "Bremse" (gelb) am ersten Anhängerfahrzeug
- 32: Bremssteuerleitung des zweiten Anhängerfahrzeugs
- 33: Drucksensor
- 34: Druckimpuls
- 35: Erste Radbremse an der Vorderachse des Zugfahrzeugs
- 36: Zweite Radbremse an der Vorderachse des Zugfahrzeugs
- 37: Erste Radbremse an der Hinterachse des Zugfahrzeugs
- 38: Zweite Radbremse an der Hinterachse des Zugfahrzeugs
- 40: Erste Radbremse an der ersten Tandemachse
- 41: Zweite Radbremse an der ersten Tandemachse
- 42: Erste Radbremse an der zweiten Tandemachse
- 43: Zweite Radbremse an der zweiten Tandemachse
- 44: Erste Radbremse an der Vorderachse des zweiten Anhängerfahrzeugs
- 45: Zweite Radbremse an der Vorderachse des zweiten Anhängerfahrzeugs
- 46: Erste Radbremse an der Hinterachse des zweiten Anhängerfahrzeugs
- 47: Zweite Radbremse an der Hinterachse des zweiten Anhängerfahrzeugs
- ECU: Elektronisches Steuergerät
- p_{B_RA1}: Radbremsdruck an den Radbremsen des ersten Anhängerfahrzeugs
- p_{B_FA2}: Radbremsdruck an den Radbremsen der Vorderachse des zweiten Anhängerfahrzeugs
- p_{B_RA2}: Radbremsdruck an den Radbremsen der Hinterachse des zweiten Anhängerfahrzeugs
- p_{BC}: Bremssteuerdruck
- p_{BC_max}: Maximaldruck in der Bremssteuerleitung
- p_{BC_soll}: Einzusteuernder Bremssteuerdruck (allgemein)
- p_{BC1}: Bremssteuerdruck am Kupplungskopf "Bremse" 26 des Zugfahrzeugs
- p_{BC1_soll}: Einzusteuernder Bremssteuerdruck
- p_{BC2}: Bremssteuerdruck am Kupplungskopf "Bremse" 30 des ersten Anhängerfahrzeugs
- p_{PD_1}: Anfänglicher Bremssteuerdruck vor dem Druckabfall
- p_{PD_2}: Bremssteuerdruck nach dem Druckabfall
- dp_{PD}: Druckdifferential des Druckabfalls
- dp_{PD}/dt_{PD}: Druckgradient des Druckabfalls
- (dp_{PD}/dt_{PD})ₘ: Mittlerer Druckgradient des Druckabfalls
- Δp_{PD}: Druckabfall, Luftdruckdifferenz verursacht durch den Druckabfall
- Δp_{PI}: Betrag des Druckimpulses
- t: Zeit
- t₁ - t₅: Zeitpunkte
- t₁'- t₅': Zeitpunkte
- t_{PD_1}: Erster Zeitpunkt (vor dem Druckabfall)
- t_{PD_2}: Zweiter Zeitpunkt (nach dem Druckabfall)
- dt_{PD}: Zeitdifferential des Druckabfalls
- Δt_{PD}: Dauer des Druckabfalls
- Δt_{PI}: Dauer des Druckimpulses

## Patentansprüche

1. Verfahren zur Bremssteuerung eines Fahrzeuggespanns (2),
welches aus einem Zugfahrzeug (4) mit einer elektronisch gesteuerten hydraulischen oder pneumatischen Bremsanlage (5) und mindestens einem Anhängerfahrzeug (6, 8) mit einer pneumatisch gesteuerten pneumatischen Bremsanlage (7, 9) besteht,
und bei dem der Bremssteuerdruck (p_{BC}) des Anhängerfahrzeugs (6, 8) mittels eines elektronisch gesteuerten Anhängersteuerventils (13) des Zugfahrzeugs (4) in wenigstens eine zu einem zugfahrzeugseitigen Kupplungskopf "Bremse" (26) führende zugfahrzeugseitige Bremssteuerleitung (19) eingesteuert wird,
wobei zu Beginn eines Bremsvorgangs ein den einzusteuernden Bremssteuerdruck (p_{BC_soll}) übersteigender Druckimpuls (34) in die zugfahrzeugseitige Bremssteuerleitung (19) eingeleitet wird,
**dadurch gekennzeichnet,**
**dass** das Volumen von wenigstens einer an den Kupplungskopf "Bremse" (26) angekoppelten Bremssteuerleitung (28, 29, 32) des wenigstens einen Anhängerfahrzeugs (6, 8) ermittelt wird,
und **dass** der Betrag (Δp_{PI}) und/oder die Dauer (Δt_{PI}) des in die wenigstens eine Bremssteuerleitung (28, 29, 32) des mindestens einen Anhängerfahrzeugs (6, 8) eingeleiteten Druckimpulses (34) in Abhängigkeit von dem Volumen der wenigstens einen Bremssteuerleitung (28, 29, 32) festgelegt wird.

2. Verfahren nach Anspruch 1, **dadurch gekennzeichnet, dass** das Volumen der wenigstens einen Bremssteuerleitung (28, 29, 32) des Anhängerfahrzeugs (6, 8) nach jeder Inbetriebnahme des Zugfahrzeugs (4) ermittelt und danach in einem Datenspeicher eines elektronischen Steuergerätes (ECU) abgespeichert wird.

3. Verfahren nach Anspruch 1 oder 2, **dadurch gekennzeichnet, dass** zur Ermittlung des Volumens der wenigstens einen anhängerseitigen Bremssteuerleitung (28, 29, 32) vorgesehen ist,
dass bei einem Lösen der Radbremsen (35, 36, 37, 38; 40, 41, 42, 43, 44, 45, 46, 47) des Fahrzeuggespanns (2) der in den mit dem zugfahrzeugseitigen Kupplungskopf "Bremse" (26) verbundenen Bremssteuerleitungen (19, 28, 29, 32) herrschende Luftdruck während des Druckabfalls (Δp_{PD}) sensorisch erfasst wird,
dass aus dem zeitlichen Verlauf des Luftdruckes die Dauer (Δt_{PD}) des Druckabfalls (Δp_{PD}) und/oder der mittlere Druckgradient ((dp_{PD}/dt_{PD})ₘ) des Druckabfalls (Δp_{PD}) bestimmt wird,
und dass aus der Dauer des Druckabfalls (Δt_{PD}) und/oder dem mittleren Druckgradienten ((dp_{PD}/dt_{PD})ₘ) des Druckabfalls (Δp_{PD}) das Volumen der wenigstens einen Bremssteuerleitung (28, 29, 32) des wenigstens einen Anhängerfahrzeugs (6, 8) bestimmt wird.

4. Verfahren nach Anspruch 3, **dadurch gekennzeichnet, dass** bei einer einen vorbestimmten Zeitraum überschreitenden langen Dauer (Δt_{PD}) des Druckabfalls (Δp_{PD}) auf ein Gesamtvolumen der wenigstens einen Bremssteuerleitung (28, 29, 32) von mehr als einem Anhängerfahrzeug (6, 8) geschlossen wird.

5. Verfahren nach Anspruch 3 oder 4, **dadurch gekennzeichnet, dass** bei einem Unterschreiten des mittleren Druckgradienten (|(dp_{PD}/dt_{PD})ₘ|) des Druckabfalls (Δp_{PD}) unter einen vorbestimmten Grenzdruckgradienten auf ein Gesamtvolumen der wenigstens einen Bremssteuerleitung (28, 29, 32) von mehr als einem Anhängerfahrzeug (6, 8) geschlossen wird.

6. Verfahren nach einem der Ansprüche 2 bis 5, **dadurch gekennzeichnet, dass** ein in einem vorhergehenden Fahrbetrieb des Fahrzeuggespanns (2) ermittelter und abgespeicherter Wert des Volumens der wenigstens einen Bremssteuerleitung (28, 29, 32) verwendet wird, solange kein aktueller Wert des Volumens der wenigstens einen Bremssteuerleitung (28, 29, 32) ermittelt wurde.

7. Verfahren nach einem der Ansprüche 2 bis 5, **dadurch gekennzeichnet, dass** ein vorgegebener Standardwert des Volumens einer Bremssteuerleitung (28, 29, 32) verwendet wird, solange kein aktueller Wert des Volumens der wenigstens einen Bremssteuerleitung (28, 29, 32) ermittelt wurde.

8. Verfahren nach einem der Ansprüche 1 bis 7, **dadurch gekennzeichnet, dass** der Betrag (Δp_{PI}) des Druckimpulses im Vergleich zu dem einzusteuernden Bremssteuerdruck (p_{BC_soll}) mit zunehmendem Volumen der wenigstens einen Bremssteuerleitung (28, 29, 32) erhöht wird.

9. Verfahren nach einem der Ansprüche 1 bis 8, **dadurch gekennzeichnet, dass** der Betrag (Δp_{PI}) des Druckimpulses im Vergleich zu dem einzusteuernden Bremssteuerdruck (p_{BC_soll}) durch einen zulässigen Maximaldruck (p_{BC_max}) in der wenigstens einen Bremssteuerleitung (28, 29, 32) begrenzt wird,
und zwar derart, dass ein zuvor festgelegter Maximaldruck (p_{BC_max}) in der wenigstens einen Bremssteuerleitung (28, 29, 32) während des Druckimpulses nicht überschritten wird (p_{BC_soll} + Δp_{PI} ≤ PBC_max).

10. Verfahren nach einem der Ansprüche 1 bis 9, **dadurch gekennzeichnet, dass** die Dauer (Δt_{PI}) des Druckimpulses mit zunehmendem Volumen der wenigstens einen Bremssteuerleitung (28, 29, 32) erhöht wird.

## Claims

1. Method for the brake control of a vehicle combination (2),
which is made up of a tractor vehicle (4) with an electronically controlled hydraulic or pneumatic braking system (5) and at least one trailer vehicle (6, 8) with a pneumatically controlled pneumatic braking system (7, 9),
and in which the brake control pressure (pac) of the trailer vehicle (6, 8) is applied into at least one tractor vehicle-side brake control line (19) extending to a tractor vehicle-side "brake" coupling head (26) by means of an electronically controlled trailer control valve (13) of the tractor vehicle (4),
wherein, at the beginning of a braking operation, a pressure pulse (34) exceeding the brake control pressure (p_{BC_soll}) to be applied is introduced into the tractor vehicle-side brake control line (19),
**characterized**
**in that** the volume of at least one brake control line (28, 29, 32) - coupled at the "brake" coupling head (26) - of the at least one trailer vehicle (6, 8) is ascertained,
and **in that** the absolute value (□p_{PI}) and/or the duration (□t_{PI}) of the pressure pulse (34) introduced into the at least one brake control line (28, 29, 32) of the at least one trailer vehicle (6, 8) are/is established depending on the volume of the at least one brake control line (28, 29, 32) .

2. Method according to Claim 1, **characterized in that** the volume of the at least one brake control line (28, 29, 32) of the trailer vehicle (6, 8) is ascertained after every start-up of the tractor vehicle (4) and, thereafter, stored in a data memory of an electronic control unit (ECU).

3. Method according to Claim 1 or 2, **characterized in that**, in order to ascertain the volume of the at least one trailer-side brake control line (28, 29, 32), it is provided
that, during a disengagement of the wheel brakes (35, 36, 37, 38; 40, 41, 42, 43, 44, 45, 46, 47) of the vehicle combination (2), the air pressure prevailing in the brake control lines (19, 28, 29, 32) connected to the tractor vehicle-side "brake" coupling head (26) is detected by sensors during the pressure drop (□p_{PD}),
that, on the basis of the time profile of the air pressure, the duration (□t_{PD}) of the pressure drop (□p_{PD}) and/or the mean pressure gradient ((dp_{PD}/dt_{PD})ₘ) of the pressure drop (□p_{PD}) are/is determined,
and that, on the basis of the duration of the pressure drop (□t_{PD}) and/or the mean pressure gradient ((dp_{PD}/dt_{PD})ₘ) of the pressure drop (□p_{PD}), the volume of the at least one brake control line (28, 29, 32) of the at least one trailer vehicle (6, 8) is determined.

4. Method according to Claim 3, **characterized in that**, in the case of a long duration (□t_{PD}) of the pressure drop (□p_{PD}) exceeding a predetermined time period, a total volume of the at least one brake control line (28, 29, 32) of more than one trailer vehicle (6, 8) is inferred.

5. Method according to Claim 3 or 4, **characterized in that**, in the event that the mean pressure gradient (|(dp_{PD/}dt_{PD})ₘ|) of the pressure drop (□p_{PD}) falls below a predetermined limit pressure gradient, a total volume of the at least one brake control line (28, 29, 32) of more than one trailer vehicle (6, 8) is inferred.

6. Method according to one of Claims 2 to 5, **characterized in that** a value of the volume of the at least one brake control line (28, 29, 32) is utilized that was ascertained, and stored, in a preceding driving operation of the vehicle combination (2), provided a current value of the volume of the at least one brake control line (28, 29, 32) was not ascertained.

7. Method according to one of Claims 2 to 5, **characterized in that** a predefined standard value of the volume of a brake control line (28, 29, 32) is utilized, provided a current value of the volume of the at least one brake control line (28, 29, 32) was not ascertained.

8. Method according to one of Claims 1 to 7, **characterized in that** the absolute value (□p_{PI}) of the pressure pulse, as compared to the brake control pressure (p_{BC_soll}) to be applied, is increased as the volume of the at least one brake control line (28, 29, 32) increases.

9. Method according to one of Claims 1 to 8, **characterized in that** the absolute value (□p_{PI}) of the pressure pulse, as compared to the brake control pressure (p_{BC_soll}) to be applied, is limited by a permissible maximum pressure (p_{BC_max}) in the at least one brake control line (28, 29, 32),
and, in fact, in such a way that a previously established maximum pressure (p_{BC_max}) in the at least one brake control line (28, 29, 32) is not exceeded during the pressure pulse (p_{BC_soll} + □p_{PI}≤ p_{BC_max}).

10. Method according to one of Claims 1 to 9, **characterized in that** the duration (□t_{PI}) of the pressure pulse is increased as the volume of the at least one brake control line (28, 29, 32) increases.

## Revendications

1. Procédé de commande des freins d'un attelage (2) composé d'un véhicule tracteur (4) équipé d'un système de freinage hydraulique ou pneumatique (5) à commande électronique et d'au moins un véhicule tracté (6, 8) équipé d'un système de freinage pneumatique (7, 9) à commande pneumatique, et dans lequel la pression de commande de frein (p_{BC}) du véhicule tracté (6, 8) est appliquée au moyen d'une soupape de commande de remorque (13) à commande électronique du véhicule tracteur (4) à au moins une ligne de commande de freinage (19) côté véhicule tracteur menant à un « frein » (26) de tête d'accouplement côté véhicule tracteur,
dans lequel, au début d'un processus de freinage, une impulsion de pression (34) dépassant la pression de commande de freinage (p_{BC_soll}) à appliquer est introduite dans la ligne de commande de freinage (19) côté véhicule tracteur,
**caractérisé en ce que**
le volume d'au moins une ligne de commande de freinage (28, 29, 32), accouplée au « frein » (26) de tête d'accouplement, dudit au moins un véhicule tracté (6, 8) est établi,
et la grandeur (Δp_{PI}) et/ou la durée (Δt_{PI}) de l'impulsion de pression (34) introduite dans ladite au moins une ligne de commande de freinage (28, 29, 32) dudit au moins un véhicule tracté (6, 8) sont fixées en fonction du volume de ladite au moins une ligne de commande de freinage (28, 29, 32).

2. Procédé selon la revendication 1, **caractérisé en ce que** le volume de ladite au moins une ligne de commande de freinage (28, 29, 32) du véhicule tracté (6, 8) est établi après chaque mise en service du véhicule tracteur (4) et est ensuite stocké dans une mémoire de données d'un appareil de commande électronique (ECU).

3. Procédé selon la revendication 1 ou 2, **caractérisé en ce que** pour l'établissement du volume de ladite au moins une ligne de commande de freinage (28, 29, 32) côté remorque il est prévu que
au moment du desserrage des freins de roue (35, 36, 37, 38 ; 40, 41, 42, 43, 44, 45, 46, 47) de l'attelage (2), la pression d'air régnant dans les lignes de commande de freinage (19, 28, 29, 32) reliées au « frein » (26) de tête d'accouplement côté véhicule tracteur soit détectée par capteur pendant la chute de pression (Δp_{PD}),
la durée (Δt_{PD}) de la chute de pression (Δp_{PD}) et/ou le gradient de pression moyen ((dp_{PD}/dt_{PD})ₘ) de la chute de pression (Δp_{PD}) sont déterminés à partir de la courbe dans le temps de la pression d'air,
et le volume de ladite au moins une ligne de commande de freinage (28, 29, 32) dudit au moins un véhicule tracté (6, 8) est déterminé à partir de la durée de la chute de pression (Δt_{PD}) et/ou du gradient de pression moyen ((dp_{PD}/dt_{PD})ₘ) de la chute de pression (Δp_{PD}).

4. Procédé selon la revendication 3, **caractérisé en ce que** pour une durée (Δt_{PD}) de la chute de pression (Δp_{PD}) dépassant une période de temps prédéterminée, on conclut à un volume total de ladite au moins une ligne de commande de freinage (28, 29, 32) de plus d'un véhicule tracté (6, 8).

5. Procédé selon la revendication 3 ou 4, **caractérisé en ce que** dans le cas d'un soupassement du gradient de pression moyen (|(dp_{PD}/dt_{PD})ₘ|) de la chute de pression (Δp_{PD}) sous un gradient de pression limite prédéterminé, on conclut à un volume total de ladite au moins une ligne de commande de freinage (28, 29, 32) de plus d'un véhicule tracté (6, 8).

6. Procédé selon l'une quelconque des revendications 2 à 5, **caractérisé en ce qu'**une valeur, établie dans un mode de fonctionnement précédent de l'attelage (2) et stockée, du volume de ladite au moins une ligne de commande de freinage (28, 29, 32) est utilisée tant qu'aucune valeur actuelle du volume de ladite au moins une ligne de commande de freinage (28, 29, 32) n'a été établie.

7. Procédé selon l'une quelconque des revendications 2 à 5, **caractérisé en ce qu'**une valeur standard prédéfinie du volume d'une ligne de commande de freinage (28, 29, 32) est utilisée tant qu'aucune valeur actuelle du volume de ladite au moins une ligne de commande de freinage (28, 29, 32) n'a été établie.

8. Procédé selon l'une quelconque des revendications 1 à 7, **caractérisé en ce que** la grandeur (Δp_{PI}) de l'impulsion de pression est augmentée en comparaison avec la pression de commande de freinage (p_{BC_soll}) à appliquer avec un volume croissant de ladite au moins une ligne de commande de freinage (28, 29, 32).

9. Procédé selon l'une quelconque des revendications 1 à 8, **caractérisé en ce que** la grandeur (Δp_{PI}) de l'impulsion de pression est limitée en comparaison avec la pression de commande freinage (p_{BC_soll}) à appliquer par une pression maximale admissible (p_{BC_max}) dans ladite au moins une ligne de commande de freinage (28, 29, 32),
notamment **en ce qu'**une pression maximale (p_{BC_max}) fixée précédemment n'est pas dépassée dans ladite au moins une ligne de commande de freinage (28, 29, 32) pendant l'impulsion de pression (p_{BC_soll} + Δp_{PI} ≤ P_{BC_max}).

10. Procédé selon l'une quelconque des revendications 1 à 9, **caractérisé en ce que** la durée (Δt_{PI}) de l'impulsion de pression est augmentée avec un volume croissant de ladite au moins une ligne de commande de freinage (28, 29, 32).
